# EUROPEAN PATENT APPLICATION

(11) **EP 1 189 148 A1**
(43) Date of publication of application: **20.03.2002**
(21) Application number: 00120462.7
(22) Date of filing: 19.09.2000
(51) Int. Cl.: G06F 17/30

(54) **Document search and analysing method and apparatus**

(71) Applicant: UMA Information Technology AG, 1070 Vienna (AT)
(72) Inventor: Dögl, Christian, 1070 Vienna (AT); Dögl, Daniel, 1070 Vienna (AT); Binder, Katharina, 1030 Vienna (AT); Cavallar, Claudia, 1040 Vienna (AT); Schwab, Reinhard, 1190 Vienna (AT)
(74) Representative: Betten & Resch

(57) **Abstract**

A document search system comprises an ontology editor including a graphical user interface for creating and modifying a hierarchical query data structure (ontology) containing a plurality of search terms (concepts), a scanner scanning a communication network and providing a scan list, an ontology indexer matching the documents stored in the scan list with the search terms contained in the query data structure (ontology) and indexing the documents dependent on the occurrence of one or more of the search terms in the document, and a display unit for displaying the indexed documents in a hierarchical order. It further comprises a graphical user interface for selecting search terms from the query data structure (ontology); thus formulating a query, and another one for displaying graphical representations of results of the search and for controlling the graphical representations. And it further comprises a user interface for selecting one or more document sets (e.g. websites) or documents which are not scanned and indexed at the time, to scan and index them on the fly and make them searchable immediately after the scan and index job is finished.

## Description

### FIELD OF THE INVENTION

The present invention relates to a document search and analysing method and a document search and analysing system for carrying out a document search and analysis in a communications network like the internet, a corporate intranet, etc.

### DESCRIPTION OF THE RELATED ART

From the published international patent application WO00-04463 a program logic for displaying text passages relevant to the solution of a task like a search task is known, wherein the relevant text passages are displayed on the screen upon entering a combination of search criteria. The text passages are displayed in concentric order around the combination of the search criteria. The radial distances of the individual text passages express their relevance to the combination of the search criteria.

Richard H. Fowler et al., Proceedings of the 14th Annual International ACM/SIGIR Conference on Research and Development in Information Retrieval, 1991, pages 142 to 151, describes a system utilising visually displayed graphic structures and a direct manipulation interface to supply an integrated environment for document retrieval. A common visually displayed network structure is used for query, document content and term relation. A query can be modified to direct manipulation of its visual form by incorporating terms from any other information structure the system displays.

From John Lamping et al., Chi'95 Conference Proceedings, Denver, May 7 to 11, 1995, pages 401 to 408, a focus and context technique for visualising and manipulating large hierarchies is known. The technique lays out the hierarchy in a uniform way on a hyperbolic plane and maps this plane on to a circular display region. This supports a smooth blending between focus and context as well as continuous redirection of the focus.

From Allen Ginsberg, IEEE Expert, October 1993, pages 46 to 56, a knowledge representation framework is known, which uses a lattice-structured version of the traditional thesaurus.

From M. Hemmje et. al., SIGIR'94 Conference, Dublin, July 3 to 6, 1994, pages 249 to 259, a visualisation interface for an abstract information space is known. Visualisations are used to communicate information search and browsing activities in a natural way by applying metaphors of spatial navigation in abstract information spaces.

G.G. Robertson et al. in Human Factors in Computing Systems Conference Proceedings, Reading, USA, April 27, 1991, pages 189 to 194 describes three 3D-visualisations of hierarchical information in the form of cone trees. This enables most effective use of the available screen space and enables the visualisation of a whole hierarchical structure.

From US patent 6,038,562 an interface is known to support state-dependent web applications accessing a relational database.

The continuing growth of the internet in recent years has made search engine services a popular tool for retrieving documents on the internet and other communication networks. The user normally enters a search term and probably some additional parameters like the document language or the document age and receives from the server, where the search engine service is located, on his or her client computer a so called hit list containing the web addresses of a large number of documents indexed with the search terms and taking into account the additional parameters. In most cases the list of documents is very long and only a few of those placed on top of the hit list will be looked at by the user. The order of the found documents is often determined by so called metatags placed in the documents. Many commercial websites use popular search terms as metatags in order to prominently appear on popular search engines.

Using the first result list the user can then refine his search by inputting further search terms or parameters. Repeating this operation several times will reduce the search result to a handable size but bares the risk that during the search valuable documents are missed.

There exists therefore a need for improved document search services in the internet and other communication networks providing the user to perform a more specific search and result analysing strategy.

### SUMMARY OF THE INVENTION

The present invention provides a document search method in a communication network, comprising the steps of providing a hierarchical query data structure containing a plurality of search terms, displaying a graphical representation of the query data structure on a display screen, providing a user interface for selecting search terms from the query data structure using the graphical representation, carrying out a document search based on the query data structure, and outputting the found documents as search result.

The search results can then be qualified according to the number of search terms of the query data structure that are contained in or assigned to a scanned document.

Preferably, the search terms of a query data structure are arranged in different hierarchical levels. So the "quality" of a document or set of documents is qualified differently for search terms of different hierarchical levels.

The query data structure may be displayed in a two-dimensional or three-dimensional graphical representation. Preferably, the query data structures may be stored in a memory device and every query data structure is assigned a unique identifier.

Preferably, the search result is also displayed as a graphical representation thereof, wherein the "quality" or matching properties of a document or document set may be expressed by a linear or circular display position or by a colour display or the like.

For certain standard search tasks the search system preferably provides, like an expert system, model query data structures. Moreover, it is possible to combine two or more query data structures to form a clustered query data structure.

The present invention further provides a document search method in a communication network, comprising the steps of providing a query data structure containing a plurality of search terms, carrying out a document search based on search terms selected from the query data structure, generating a graphical representation of the search result dependent on the match properties of the searched documents and a set of additional result parameters, providing a user interface for controlling the graphical representation of the search result dependent on the match properties and/or the result properties, and displaying the graphical representation of the search result on a display medium.

The two-dimensional or three-dimensional graphical display of the search result reflects the match properties of a particular document or set of documents with respect to the search terms. The result representation can be adapted by the user, for example by differently weighting of search terms or by additionally taking into account result parameters like the document size, language, publication date server address or domain extension.

One document, which in view of the user fits ideally to the search, may be selected as an ideal document for future search or analysing purposes.

Preferably, a number of model result display profiles are provided, which may be modified by the user or automatically adapted to the user's behavior by a learning algorithm.

For carrying out a continuous watch a search based on a specific query data structure may be carried out repeatedly after a predetermined time period, for example every week or every month. The new results are compared to the old ones and the differences are shown in the graphical representation.

The method may further include the step of simulating a form wrapper or accessing data bases which acquire a special access form. These forms are preferably updated automatically without requiring further user interaction.

The present invention further provides a document search method in a communication network where documents can be searched which are not scanned and indexed until the user wants to search them. The method provides a query data structure containing a plurality of search terms, carrying out a document search based on either search terms selected from the query data structure or on full text search, or both. It further provides the possibility for the user to select one or more document sets (e.g. websites) or documents which are not scanned and indexed at the time. After the user selected one or more document sets (e.g. websites) or documents, the scanner starts without delay to scan the selected items and the ontology and full text indexers start to index them. In the meantime, the user selects search terms from the query data structure or provides search terms for a full text search, or combines both. As soon as the scanner and indexers complete their jobs, the user's search is carried out. Afterwards, a graphical representation of the search result dependent on the match properties of the searched documents and a set of additional result parameters is generated. All further analysis features as described above are provided, too.

This method further provides the possibility to include the selected one or more document sets (e.g. websites) or documents into a public access or user-specific collection of links to document sets (e.g. websites) or documents which allow the user or users to search this new items together with all the other items already contained in this collection whenever he or they use the document search method in the future

The present invention further provides an ontology editor including a graphical user interface for creating and/or modifying a hierarchical query data structure containing a plurality of search terms, a scanner scanning a communication network and providing a scan list of searched documents, an ontology indexer matching the documents stored in the scan list with the search terms contained in the query data structure (ontology) and indexing the documents dependent on the occurrence of one or more of the search terms in the document, and a display unit for displaying the indexed documents in a hierarchical order.

Preferably, the ontology editor includes functions like automatic check of multiple use of search terms and tracking the building steps of a query structure. It is also possible to provide a thesaurus function for providing synonymous terms, language recognition and translation functions for translating search terms to a different language and for outputting a definition of a selected search term.

The invention still further provides a system including one or more server computers, comprising a scanner scanning a communications network and providing a scan list, a client interface for selecting, from a client device, search terms from a query data structure containing a plurality of search terms in a hierarchical order, an ontology indexer matching the documents stored in the scan list with the search terms contained in the query data structure (ontology) and indexing the documents dependent on the occurrence of one or more of the search terms in the document, and an output client interface for outputting search results for display on a client device.

The present invention still further provides a document search method in a communication network, comprising the steps of providing a query data structure containing a plurality of search terms, carrying out a document search based on search terms selected from the query data structure, generating a graphical representation of the search result dependent on the match properties of the searched documents and set of additional result parameters, providing a user interface for controlling the graphical representation of the search result by its dependence on the match properties and/or the result properties, and displaying the graphical representation of the search result on a display medium.

Further preferred embodiments and variations of the invention are described in the dependent claims.

### BRIEF DESCRIPTION OF DRAWINGS

The present invention and further objects, features and advantages thereof will become apparent from the following description of preferred embodiments in connection with the drawings in which
Figure 1 shows a schematic block diagram of a preferred embodiment of the present invention;
Figure 2 shows a flow chart of information retrieval steps of a preferred embodiment of the present invention;
Figure 3 shows a flow chart of method steps of handling a client request of a preferred embodiment of the present invention;
Figure 4 shows an example of a preferred user screen layout according to a preferred embodiment of the present invention;
Figures 5.1 to 5.4 show flow charts of client method steps according to a preferred embodiment of the present invention;
Figure 6 is a flow chart illustrating the function of the result space sub-system of a preferred embodiment of the present invention;
Figure 7 is a flow chart showing method steps of the dynamic data filtering function of a preferred embodiment of the present invention;
Figure 8 shows a graphical representation of the first hierarchical level of query data structure containing three search terms;
Figure 9 shows an example of the graphical representation of the highest level of a search result; and
Figure 10 shows the graphical representation of a second level of a search result.

### DETAILED DESCRIPTION OF PREFERRED EMBODIMENTS

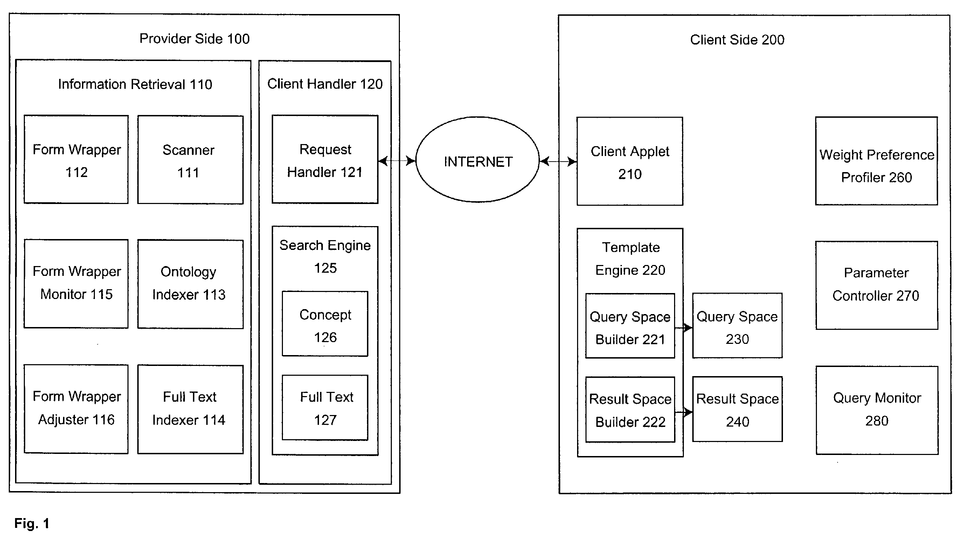

Figure 1 shows schematically the basic design of a preferred embodiment of a document search system of the present invention. The modules of the system are divided upon the provider side 100 and the client side 200. It has to be acknowledged, however, that some modules may be located differently as shown in the embodiment of Figure 1. It is, for example, also possible to provide the template engine 220 as part of the provider side generating query space 230 and result space 240 for download by the client 200. Moreover, the provider side 100 need not to be confined to one server computer. The units may be divided upon a plurality of server and database systems. As client side any suitable terminal device like a personal computer, a laptop computer or an internet enabled mobile phone may be employed. Communication between provider side and client side is preferably carried out over the internet or any other network. Alternatively, client and server can run on the same platform , searching the local memory.

The provider side, on the one hand, comprises the information retrieval unit 110 and, on the other side, the client handler unit 120.

The information retrieval unit 110 contains those functional blocks dealing with the information retrieval from the internet or a different communication network like a corporate intranet.

The crawling (downloading of webpages) is done by the so called scanner 111. The scanner reads instructions of a job providing URLs of target websites, visits the provided websites, follows all links on the pages of the website according to the instructions in the job and stores various information about the found links associated with an unique ID in a scan list, which is stored on a storage device. The scan list is the basis for indexing the content of the websites.

There are provided two methods of indexing the documents. The first indexing method provides a full text index and the second indexing method a so called ontology index.

The full text indexing function is performed by the full text indexer 114. It fetches each document from the scan list and parses it. When parsing the document, it creates a new entry for each word in the so called word index, that is not yet contained in it, and associates it with a unique word ID. It may also create a prefix tree which is a special version of the word index that enables prefix search. Furthermore, a full text index is created which stores the relation between the documents and the word index.

The ontology indexing function is performed by the ontology indexer 113. Similar to the full text indexer it fetches each document found in the scan list and parses it. The ontology indexer uses as second input source for the indexing function an ontology which will be described in more detail later. The ontology is comprised of a system of related concepts that describes a certain expert knowledge for carrying out the search. The concepts incapsulate certain terminology that is likely to be used to describe a named concept in the text. The terminology in the concept is encoded in regular expressions. When the ontology indexer passes the web document it matches the regular expressions from the concepts against the text and thus associates match concepts with the document and stores it in an ontology index. The form wrapper 112 simulates filling in a form for database access. The form wrapper monitor 115 recognizes changes of forms and informs the administrator or the form wrapper adjuster 115 which automatically updates the forms wrapper.

The client handler 120, on the other hand, is responsible for handling client requests . The client handler can be broken down in two major sub-systems, mainly the request handler 121 and the search engine 125.

The request handler is responsible for inputting client requests, passing these requests on to the other sub-systems for processing and returning the appropriate server response. The request handler may be implemented as Java Servlet or any other server-sided technology (cgi, php3, etc.) attached to a webserver. It is also possible to provide several request handlers for different client requests, for example for full text search or for concept search requests.

The search engine sub-system 125 is responsible for processing search queries and consists of the concept search engine 126 and the full text search engine 127 for carrying out concept searches and full text searches, respectively. It is, however, also possible in a client request to combine full text and concept search.

The client side or client 200 comprises a client applet 210 being responsible for the communication with the server, a template engine 220 for generating display representations of the query data structure and the search result and the weight preference profiler 260, the parameter controller 270 and the query monitor 280, which will be described in more detail later.

The query space builder 221 generates the query space 230, that is the two-dimensional or three-dimensional graphical representation of the query data set or ontology. A result builder 222 generates the result space 240 for displaying a graphical representation of the search results in 2D or 3D. Another client, the ontology editor, is provided for administrative purposes.

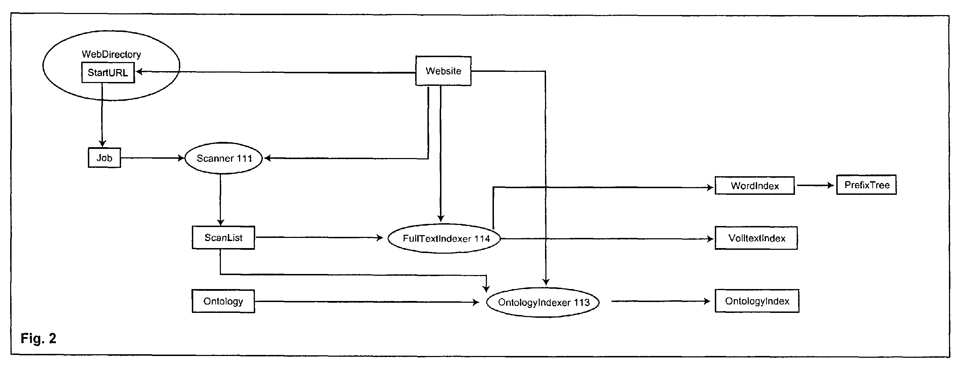

Figure 2 is a flow chart showing the method steps carried out by the information retrieval module 110 for obtaining the necessary information required for obtaining the search results.

A search system and method of the present embodiment uses a collection of websites as the target of the search. Usually the information or service provider has the URLs of these websites stored in some kind of web directory, either categorised or as hot link lists. In any case, a job is created for each URL of a website which contains beside the address different instructions about how the links of the site should be followed, etc. The scanner then carries out the tasks contained in the job and produces the corresponding scan list. The full text indexer 114 uses this scan list to produce a full text index, a word index and/or a prefix tree. The ontology indexer 113 uses the ontology for generating an ontology index of the documents contained in the scan list.

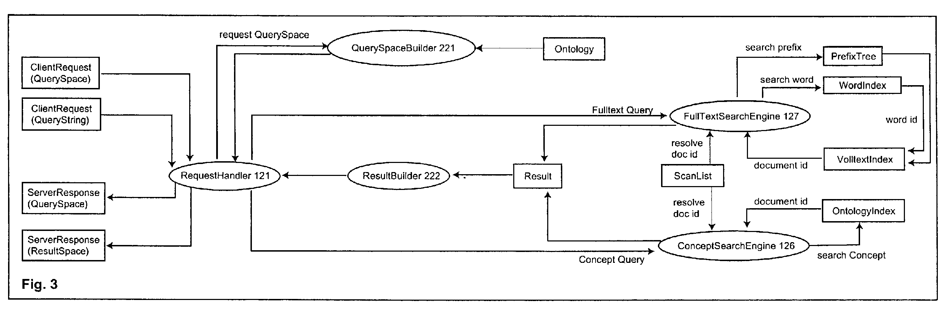

The operation of the client handler is illustrated in Figure 3.

As a starting point, the request handler 121 receives from the client a client request, either containing a request for a certain query space or a search string. The query space is produced by the query space builder 221 and sent to the client. A concept search is handled by the concept search engine 126 using the scan list and the ontology index. The full text query is handed over to the full text search engine 127 for executing a full text search using the word index, full text index and prefix tree (see Figure 2). The document IDs of those documents in which the search term appears are returned by the search engine as search result to the request handler and subsequently to the client in the form of a result set or a document list.

The search result is then transformed into a graphical representation by the result builder 222 and display on the client display screen.

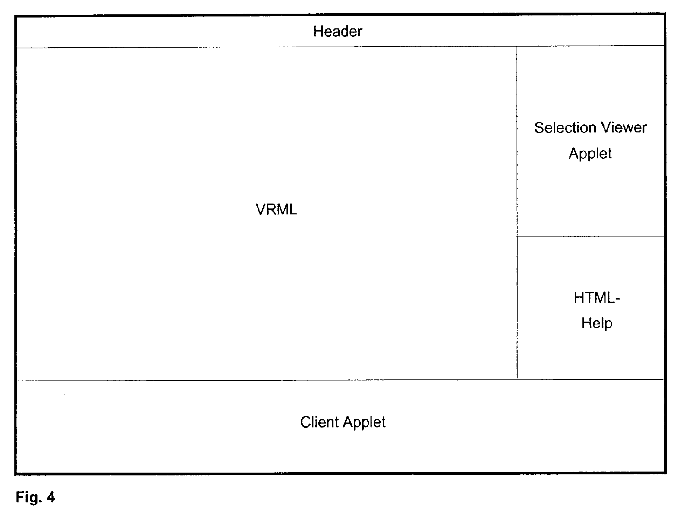

Preferably, the client side runs in a web-browser and is implemented using, for example, Java, Java Script, HTML and VRML (virtual reality modeling language). The communication between the different components in the different frames shown in Figure 4 is preferably accomplished by using a Java Script bridge. The VRML frame is used for displaying the query data structure (ontology) as well as the search result. The client applet section may contain further sub-sections for providing additional information for the user as well as a parameter control section.

In the following the method of creating a query data structure or ontology is discussed. When the user logs in to the system he will be presented a screen display corresponding to that shown in figure 4. A number of ontologies are offered for user selection. Then the user clicks on one of the presented ontologies, for example the ontology "new media law", a graphical representation of the uppermost level of the ontology is displayed on the screen, as is shown on figure 8. The uppermost level contains, in this example, the search terms or concepts 'technology', 'commerce', and 'legal issues'. Everyone of the three nodes consists of two sub-nodes which may for example be displayed in different colors. Selecting the first sub-node, for example by a mouse click, opens the next lower level of the concept, in the case of technology for example comprising the concepts 'internet software' and 'interface'.

Clicking the second sub-node selects this concept or search term for the search. Clicking of the second sub-node preferably also initiates the display of an explanation of the selected search term on the screen.

After selecting one concept of the second level, for example 'interface' the concepts of the next more detailed level are shown, in this example e.g. 'graphical user interface', 'programming interface' and 'human computer interface'. By selecting the concepts the user can so configure the query for carrying out the document search. A navigation through the three-dimensional virtual ontology space allows the user to intuitively understand and refine his search strategy.

When the query is finished the server executes the document search as has been described above in connection with figures 2 and 3. The search result is then also provided as a graphical representation of the found documents or document sets dependent on the concept contained in the search ontology. Figure 9 shows an example of a graphical representation of the uppermost level of the search results. Four result fields are recognizable wherein the arrow on the lower left side points in the direction of the best matching between the search terms and the found documents or document sets. In the shown example the query contains four different search terms or concepts, for example those three shown in figure 8 and the additional search term 'internet'. The result field at the tip of the arrow contains the found documents corresponding to all four concepts. The next result space contains those documents with three of the four terms, then followed by three different result sets each containing two of the search concepts and then those documents including one of the search terms. The height of the column represents the number of documents found. Preferably different colors represent different search terms.

If the user now clicks to one of the result fields or one of the columns shown in figure 9 he will be presented the more detailed results of the next lower level of the search result. The example shown in figure 10 is the more detailed view of the "best" results of the right-most result space of figure 9. The picture shows three documents which each contain all four concepts represented by differently colored columns. The different heights of these columns show how often the concept or search term appears in the respective document. If the user clicks to one of the three documents shown he will be linked automatically to the address of the respective document. The triangle on the right-most document shows that this document has already been "visited" by the user.

In order to improve and personalize the result analysis it is possible to display the result representation also on other parameters than the matching property. These parameters enclose document parameters like the document size, the date of the last modification, the language of the document, document ID etc. and server parameters like the server size, the number of matching documents of one server, the domain extension etc.

Dependent on these parameters the visualization of the search result can be adjusted in order to optimize the result visualization. The visualization properties which can be varied include the position of a document representation, its orientation, size, form, icon, visibility, color, transparency or assigned labels. For lower level documents the visualization properties include a clustering of objects, ranking the object, focussing and emphasizing objects.

It is for example possible for a user to include in the displayed results only documents having a size between 5 and 50 pages, being in English, German or French language and being up-dated no longer than twelve months ago. It is also possible to explicitly exclude or include specific servers or domain extensions (.com, .org, .int, .at, .de).

These adjustments are preferably carried out by the parameter controller 270 using an interactive graphical user interface.

The parameter controller 270 allows a user to change the weight of different concepts for analyzing the results. Different search terms can therefore have different importance for the qualification of the search result. This allows the user to personalize the displayed search result representation. The weight preference profiler 260 is a learning algorithm which automatically adjusts the display parameters depending on the user's behavior.

With the query monitor 280 it is possible to carry out identical or similar searches on a regular basis, for example every week or every month. The results are then available for the user after logging in to the system. The new results are compared to the old ones and the differences are shown in the graphical representation.

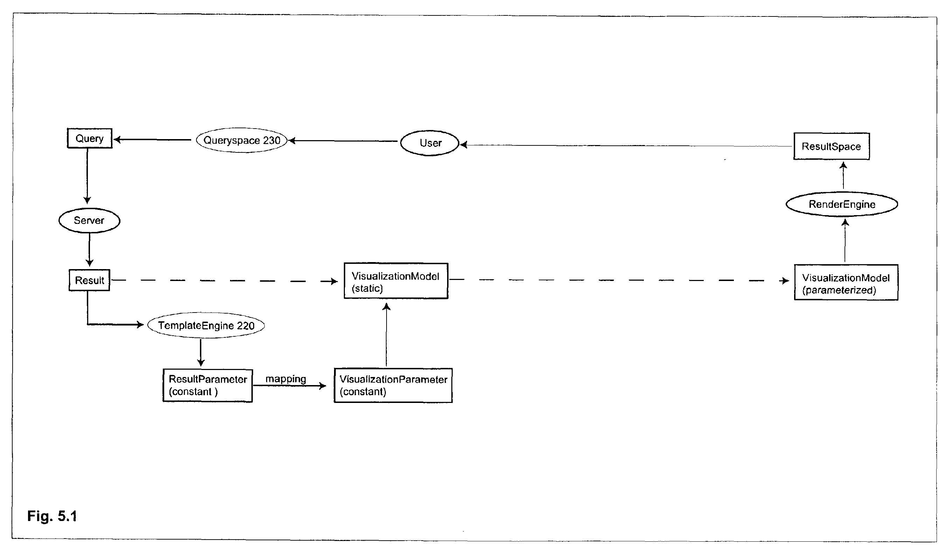

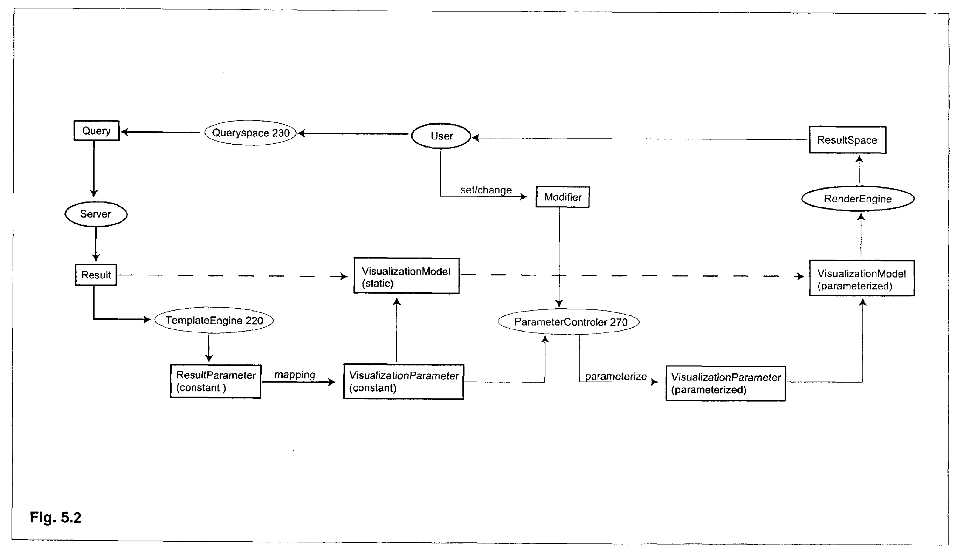

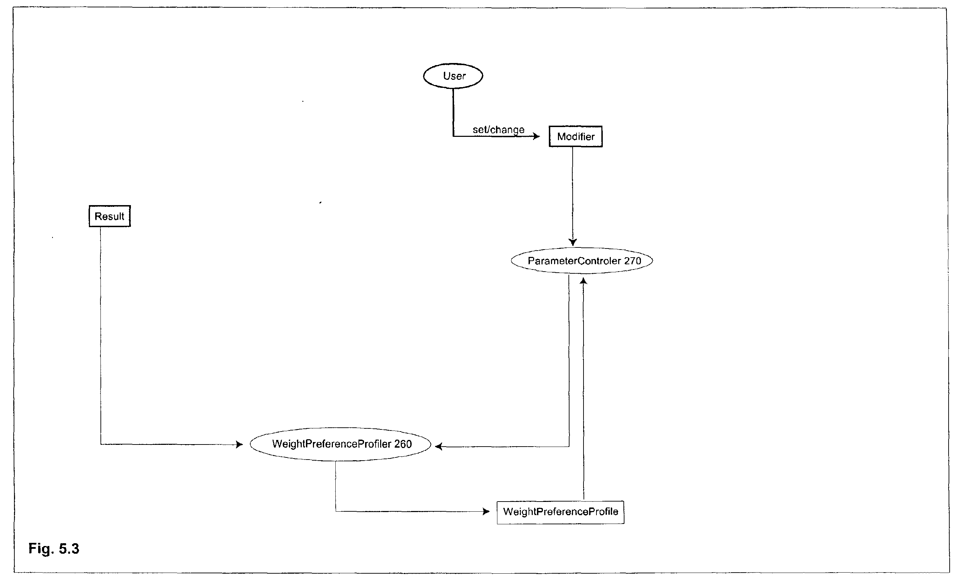

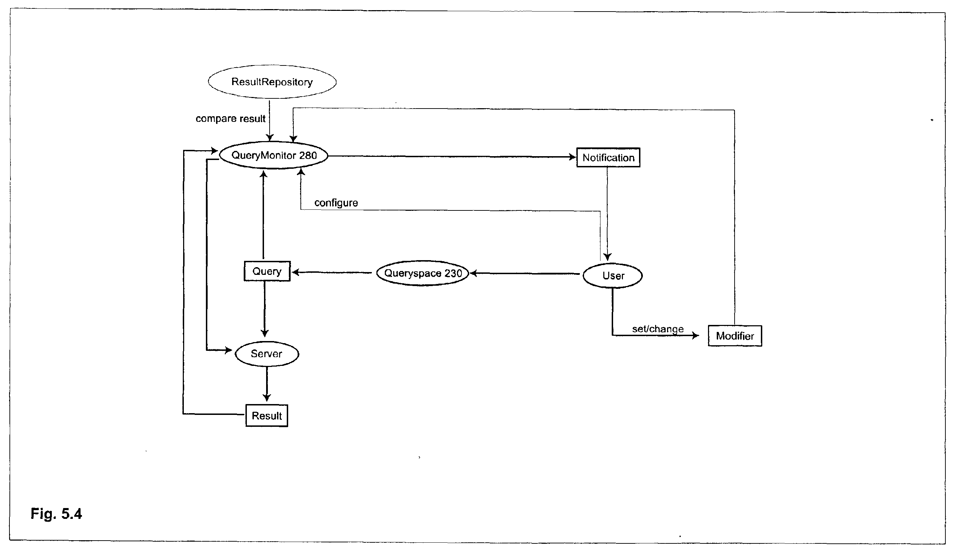

Figures 5.1 to 5.4 show the method steps of the result visualization and analysis according to a preferred embodiment of the invention.

The operation shown in figure 5.1 is the standard case: The user selects a query using the query space 230 and sends it to the server, the server generates a result and sends it back to the client. There, the template engine 220 produces the (static) visualization model which is then rendered.

In the operation shown in figure 5.2 the user uses the parameter controller 270: The user selects a query using the query space 230 and sends it to the server, the server generates a result and sends it back to the client. There, the template engine 220 produces the (static, for the beginning) visualization model which is then rendered. Until here, the process is exactly the same as in figure 5.1. Now, the user modifies parameters using the parameter controller 270. This provokes the template engine 220 to produce an parameterized update of the visualization, which is then rendered.

In the operation shown in figure 5.3 the user uses the weight preference profiler 260. In phase 1, the weight preference profiler 260 learns a profile: The weight preference profiler 260 knows the result, the user modifies parameters using the parameter controller 270. Now the weight preference profiler 260 can either use this modification for learning after the user told him to do so (teaching mode), or he can watch the user's actions automatically (watchdog mode). In both cases, the weight preference profiler 260 saves the combination result/parameter settings. This procedure is repeated until an adequate amount of samples exists.
In phase 2, the weight preference profiler 260 applies the profile. The user sends a query, the server returns a result, the template engine 220 produces a (static) visualization. Now there are two possibilities: The user can ask the weight preference profiler 260 to adjust the parameters for the new result using the profile, or the weight preference profiler 260 does this automatically. Both actions provoke the template engine 220 to produce an parameterized update of the visualization, which is then rendered.

In the operation shown in figure 5.4 the user uses the query monitor 280 for monitoring a query over a longer period: The user charges the query monitor 280 with a monitoring job. The query monitor 280 saves query and result and parameter settings. The user defines a monitoring frequency. Depending on this frequency, the query monitor 280 sends the query to the server again, and receives a new result. Now the query monitor 280 compares this result with the saved one. If he finds differences, he sends a message to the user. Now the user can call the result including the parameter settings, which contains visualizations of the differences.

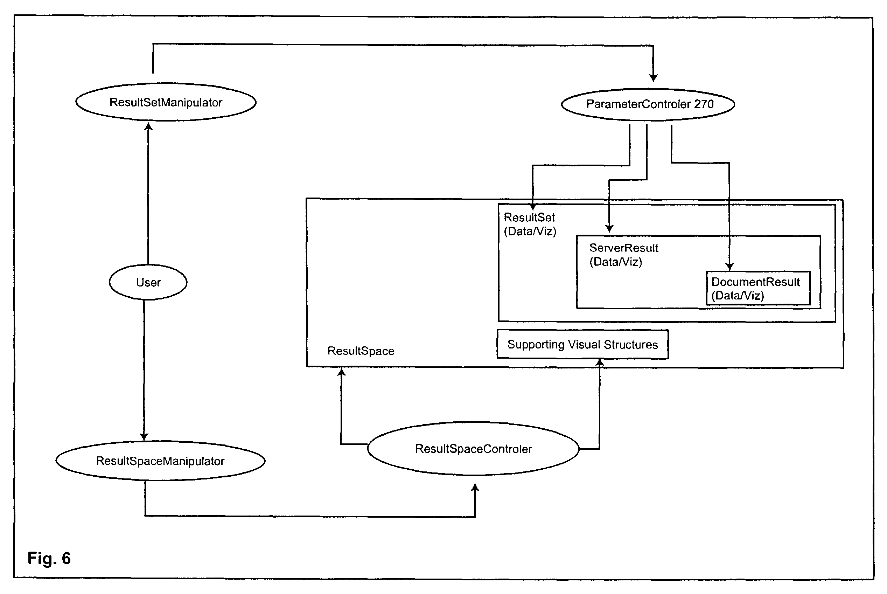

Figure 6 illustrates the result space sub-system of a preferred embodiment of the present invention.

The user controls by means of an interactive result set manipulator (preferably on the display screen) the parameter controller 270 to change the result document set in dependence on result parameters like the document size, a language, update age etc. On the other hand the user can also manipulate the visual appearance of the displayed results by navigation through result space.

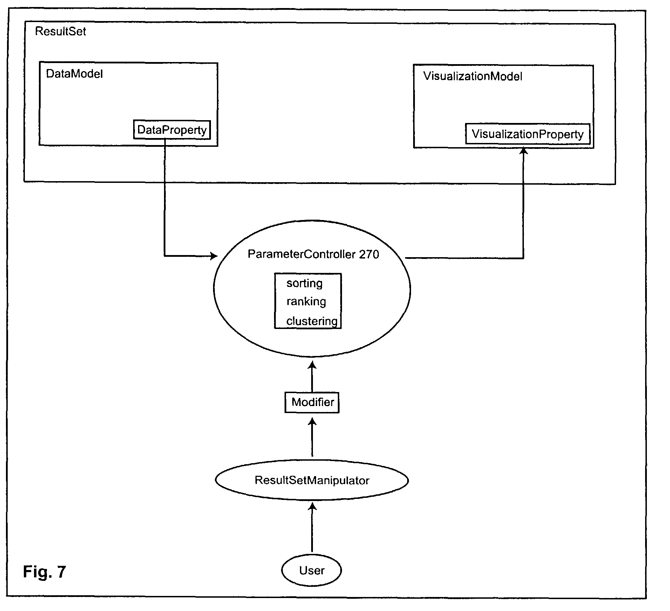

Figure 7 illustrates the dynamic filtering with the parameter controller 270. Each property of the data model of the search result is mapped to a property of the visualization model. A modifier is assigned to each pair of data properties/visualization properties. A value of each modifier can be changed by a manipulator (compare figure 6), which is implemented by a user interface component. Each time the value of a modifier is changed, the parameter controller applies this value to the corresponding data property, then reapplies the ranking/sorting/clustering function to the result data model and maps the data model again onto the visualization model. The adjusted result visualization is then displayed on the user display.

## Claims

1. A document search method in a communication network, comprising the steps of:
a) providing one or more hierarchical query data structures (ontologies) containing a plurality of search terms (concepts),
b) displaying a graphical representation of the query data structure on a display screen,
c) providing a user interface for selecting search terms out of one of the query data structures to form a query using the graphical representation,
d) carrying out a document search based on the search terms selected from the query data structure, and
e) outputting the found documents as search result.

2. The method of claim 1, wherein the search terms contained in the query data structure are arranged in different hierarchical levels.

3. The method of claim 2, further comprising the step of graphically displaying the hierarchical query data structure in a two-dimensional or three-dimensional representation.

4. The method of claim 2 or 3, wherein every query data structure is assigned a unique identifier.

5. The method of claim 3 or 4, wherein different search terms are displayed in different graphical representations, for example colours.

6. The method of one of claims 1 to 5, comprising the step of displaying a graphical representation of the search result.

7. A hierarchical query data structure (ontology) administration method in a communication network, wherein the multiple use of a search term in the query data structure is checked.

8. The method of claim 7, wherein different query data structures (ontologies) are assigned to different administrators.

9. The method of one of claims 7 to 8, wherein the building steps of a query data structure are automatically tracked.

10. The method of one of claims 7 to 9, comprising a thesaurus function for providing synonymous terms to search terms contained in the query data structure.

11. The method of one of claims 7 to 10, comprising language recognition and translation steps for translating search terms into a different language.

12. The method of one of claims 7 to 11, further comprising a definition search step for searching, upon request, a definition of a selected search term over the communication network.

13. The method of any one of claims 1 to 12, wherein model query data structures are provided for standard search tasks.

14. The method of any one of claims 1 to 13, wherein two or more query data structures are combined to form a clustered query data structure.

15. The method of one of claims 1 to 6, wherein a three-dimensional presentation of the query data structure is displayed from various viewpoints, between which a user is able to navigate freely.

16. A document search method in a communication network, comprising the steps of:
a) providing a query data structure (ontology) containing a plurality of search terms,
b) carrying out a document search based on search terms selected from the query data structure,
c) generating a graphical representation of the search result dependent on the match properties of the searched documents and a set of additional result parameters,
d) providing a user interface for controlling the graphical representation of the search result dependent on the match properties and/or the result properties, and
e) displaying the graphical representation of the search result on a display medium.

17. The method of claim 16, wherein the match properties include the number of matching search terms (concepts), the frequency of matching search terms, content related properties like a document title, document URL or links to other documents.

18. The method of claim 16 or 17, wherein the result parameters include the document size, language, publication date, domain extension and server address of a document.

19. The method of one of claims 16 to 18, wherein the user selectable control of the graphical representation of the search result includes imposing different weights to different search terms.

20. The method of claim 19, wherein the display of the search result parameters include server result parameters like the server size, number of matching documents on a server or the domain extension of the server.

21. The method of any one of claims 16 to 20, wherein the selection of a graphical representation of a displayed document set of the search result initiates a more detailed display of a document set or a link to an individual document.

22. The method of any one of claims 1 to 21, wherein one document of the search result is selectable as ideal document for future search or analysing purposes.

23. The method of one of claims 16 to 21, wherein a number of model result display profiles for standard search result analysing tasks are provided.

24. The method of claim 23, wherein the default result display or the model result display profiles can be modified by the user.

25. The method of claim 23 or 24, wherein a model search result display profile is adapted to the user's behavior by an automatic learning algorithm.

26. The method of any one of claims 1 to 25, wherein a search based on a specific query data structure is carried out repeatedly after predetermined time periods, the new results are compared to the old ones and the differences are shown in the graphical representation.

27. A method of any one of claims 1 to 26, further comprising the step of simulating a form wrapper for accessing a data base.

28. The method of claim 27, wherein the simulated form wrapper is an html form.

29. The method of claim 27 or 28, further comprising the step of regularly observing modifications of access forms required by certain data bases and manually or automatically amending the simulated form wrapper accordingly.

30. A document search system, comprising:
an ontology editor including a graphical user interface for creating and/or modifying a hierarchical query data structure (ontology) containing a plurality of search terms,
a scanner scanning a communication network and providing a scan list, containing descriptions of scanned documents,
an ontology indexer matching the descriptions of documents stored in the scan list with the search terms contained in the query data structure (ontology) and indexing the documents dependent on the occurrence of one or more of the search terms in the document, and
a display unit for displaying the indexed documents in a hierarchical order.

31. The document search system of claim 30, further comprising combining a plurality of query data structures to form a clustered query data structure.

32. The document search system of claim 30 or 31, further comprising a result viewer for displaying the search results as a two-dimensional or three-dimensional graphical representation.

33. The document search system of claim 32, further comprising a parameter controller enabling a user to vary different parameters determining the graphical representation of the search result.

34. The document search system of any one of claims 30 to 33, further comprising a full text indexer for indexing documents contained in the scan list.

35. A server computer system including one or more server computers, comprising:
a scanner scanning a communications network and providing a scan list,
a client interface for creating and/or modifying, from a client device, a query data structure (ontology) containing a plurality of search terms in a hierarchical order,
an ontology indexer matching the documents stored in the scan list with the search terms contained in the query data structure (ontology) and indexing the documents dependent on the occurrence of one or more of the search terms in the document,
a client interface for selecting, from a client device, certain search terms from a query data structure, and
an output client interface for outputting search results for display on a client device.

36. A document search system, comprising:
an input unit for selecting search terms from a query data structure comprising a plurality of search terms (concepts),
a search unit for carrying out a document search based on the query data structure,
a result building unit for generating a graphical representation of the search result dependent on the match properties of the searched documents and on additional result parameters,
a control unit for controlling the graphical representation of the search result dependent on the match properties and result properties, and
a display unit for displaying the graphical representation of the search result.

37. The document search system of claim 36, wherein the result parameters include document parameters like the document size, language or publication date and/or server parameters like the server address, server size and domain extension.

38. A document search method in a communication network, comprising the steps of:
a) providing a query data structure (ontology) containing a plurality of search terms,
b) providing a user interface for selecting one or more document sets (e.g. websites) or documents which are not scanned and indexed at the time,
c) carrying out a scanning and indexing (ontology index and/or full text index) job for this one or more document sets or documents,
d) carrying out a search in this items based on search terms selected from the query data structure and/or on full text search,
e) generating a graphical representation of the search result dependent on the match properties of the searched documents and a set of additional result parameters,
f) providing a user interface for controlling the graphical representation of the search result dependent on the match properties and/or the result properties, and
g) displaying the graphical representation of the search result on a display medium.

39. The method of claim 38, wherein the selected one or more document sets or documents are included into a public access or user-specific collection of links to document sets or documents which allow the user or users to search this new items together with all the other items already contained in this collection whenever he or they use the document search method in the future.

40. A computer program comprising program code for carrying out the methods of any one of claims 1 to 29.

41. A data structure representing a search result of a document search in a communication network, comprising:
identifiers of the documents representing the search result, wherein the documents are arranged in a hierarchical structure dependent on match properties of the searched documents and on additional result properties representing further characteristics of a searched document and/or the server on which the document has been found.
